# EUROPÄISCHE PATENTANMELDUNG

(11) **EP 4 542 075 A1**
(43) Veröffentlichungstag der Anmeldung: **23.04.2025**
(21) Anmeldenummer: 24206405.3
(22) Anmeldetag: 14.10.2024
(51) Int. Cl.: F16D 41/30

(54) **ANTRIEBSANORDNUNG FÜR EIN FAHRRAD**

(30) Priorität: 19.10.2023 DE 102023210289
(71) Anmelder: ZF Friedrichshafen AG, 88046 Friedrichshafen (DE)
(72) Erfinder: Lauhoff, Jakob, 72070 Tübingen (DE); Holder, Kevin, 88074 Meckenbeuren (DE); Löchte, Oliver, 88239 Wangen (DE); Pagel, Janik, 88131 Lindau (DE); Neumann, Finn, 88212 Ravensburg (DE)
(74) Vertreter: ZF Friedrichshafen AG

(57) **Zusammenfassung**

Die Erfindung bezieht sich auf eine Antriebsanordnung für ein Fahrrad. Die Antriebsanordnung weist einen Klinkenfreilauf (14) auf. Der Klinkenfreilauf (14) weist einen ersten Ring (30) mit wenigstens zwei beweglich daran gelagerten Klinken (34) und einen zweiten Ring (32) mit einer Verzahnung (36) auf. Die Antriebsanordnung weist wenigstens einen Sensorvorrichtung (28) auf, welche dazu ausgebildet ist, eine Verformung des ersten Rings (30) des Klinkenfreilaufs (14) aufgrund einer anliegenden Antriebskraft zu erfassen. Die Klinken (34) sind ungleichmäßig in Umfangsrichtung beabstandet an dem ersten Ring (30) angeordnet. Zudem bezieht sich die Erfindung auf ein Fahrrad.

## Beschreibung

### Technisches Gebiet

Die vorliegende Erfindung bezieht sich auf eine Antriebsanordnung für ein Fahrrad. Zudem bezieht sich die vorliegende Erfindung auf ein Fahrrad.

### Stand der Technik

Bei Fahrrädern ist es bekannt, einen Freilauf vorzusehen. Damit kann beispielsweise eine Tretkurbelwelle von einem angetriebenen Laufrad abgekoppelt werden. So kann das Fahrrad rollen, ohne dass dabei jeweilige Pedale des Fahrrads mitdrehen. Bei Pedelecs kann mit einem Freilauf beispielsweise auch ein Antriebsmotor abgekoppelt werden. In einem Sperrzustand kann der Freilauf dagegen zwei Wellen miteinander drehfest verbinden, um beispielsweise eine Übertragung von Antriebskraft zu ermöglichen.

Durch eine Erfassung einer Verformung eines Bauteils des Freilaufs kann dabei die übertragene Antriebskraft erfasst werden, beispielsweise um einen Antrieb zu steuern. Allerdings kann es je nach Bauform des Freilaufs sowie einer relativen Position, in welcher die beiden Wellen miteinander verbunden wurde, zu Störgrößen kommen. Beispielsweise kann im Sperrzustand in dem Freilauf eine Radialkraft wirken, welche den Freilauf abhängig von einer Sperrzustandsposition verformt. Entsprechend kann die erfasste Verformung nur ungenau zu der übertragenen Antriebskraft korrespondieren.

In der DE 10 2012 100 682 A1 ist ein Drehmomentsensor und ein Freilauf beschrieben, der ein erstes Drehelement aufweist, durch das ein zu bestimmendes Drehmoment auf ein zweites, zu dem ersten Drehelement koaxiales Drehelement in einer Drehrichtung übertragbar ist. Zudem wird eine Einrichtung zur Ermittlung einer Verdrehung des ersten Drehelements gegen das zweite Drehelement in der genannten Drehrichtung sowie zur Bestimmung des Drehmoments anhand der ermittelten Verdrehung beschrieben. Die Drehmomentbestimmung ist so sehr aufwendig.

### Darstellung der Erfindung

Ein erster Aspekt betrifft eine Antriebsanordnung für ein Fahrrad. Die Antriebsanordnung kann beispielsweise ein Getriebe, eine Tretkurbelwelle, ein Laufrad und jeweilige Kraftübertragungselemente zu dem Laufrad aufweisen. Die Antriebsanordnung kann einen Antriebsmotor aufweisen, beispielsweise ausgebildet als Elektromotor. Die Antriebsanordnung kann für ein als Pedelec ausgebildetes Fahrrad ausgebildet sein. Die Antriebsanordnung kann dazu ausgebildet sein, eine Antriebskraft von einem Fahrradfahrer und optional von dem Antriebsmotor an das Laufrad zu übertragen.

Die Antriebsanordnung weist einen Klinkenfreilauf auf. Ein Klinkenfreilauf wird auch als Sperrklinkenfreilauf bezeichnet. Ein Freilauf kann beispielsweise Drehmoment nur in eine Drehrichtung übertagen, wobei sich der Freilauf dann in seinem Sperrzustand befindet. Bei einer relativen Drehrichtungsumkehr wird eine Verbindung dagegen selbsttätig gelöst, womit sich der Freilauf dann in seinem Freigabezustand befindet. In dem Sperrzustand können sich jeweilige Klinken des Klinkenfreilaufs in einem Eingriff befinden. In dem Freigabezustand gleiten die Klinken des Klinkenfreilaufs dagegen beispielsweise ab. Der Klinkenfreilauf kann beispielsweise dazu ausgebildet sein, einen Antrieb, wie eine Tretkurbelwelle, von einem Abtrieb zu entkoppeln. Beispielsweise kann der Klinkenfreilauf die Tretkurbelwelle auch von dem Antriebsmotor entkoppeln oder den Antriebsmotor von der Tretkurbelwelle. Der Klinkenfreilauf kann auch dazu ausgebildet sein, einen Gang in dem Getriebe der Antriebsanordnung zu verändern.

Der Klinkenfreilauf weist wenigstens einen ersten Ring und einen zweiten Ring auf. Die beiden Ringe können permanent drehfest jeweils mit einer Welle der Antriebsanordnung verbunden sein. Die Ringe können auch eine Scheibe ausbilden. Beispielsweise kann ein als Innenring ausgebildeter Ring mit einer sich radial erstreckenden Wandung mit einer Welle drehfest verbunden sein. Die Ringe können auch jeweilige nicht ringförmige Teilbereiche und alternativ oder zusätzlich dezentrale Durchgangsöffnungen aufweisen.

Der zweite Ring weist eine Verzahnung auf. Die Verzahnung kann sich beispielsweise entlang eines Umfangs des zweiten Rings radial innen oder außen erstrecken. Die Verzahnung kann für einen Eingriff durch die Klinken ausgebildet sein. Der Klinkenfreilauf weist wenigstens zwei beweglich an dem ersten Ring gelagerte Klinken auf. Die Klinken können auch als Sperrklinke bezeichnet werden. Die Klinken können beispielsweise an einem dem zweiten Ring zugewandten Ende verschwenkbar um eine axiale Drehachse an dem ersten Ring gelagert sein. Die Klinken befinden sich beispielsweise in einem Sperrzustand des Klinkenfreilaufs in Eingriff mit der Verzahnung des zweiten Rings. Die Klinken können bezüglich des Eingriffs beispielsweise federvorgespannt sein. In einem Freigabezustand ist der Eingriff der Klinken mit der Verzahnung aufgehoben. In dem Sperrzustand sind die beiden Ringe drehfest miteinander über den Eingriff verbunden. In dem Freigabezustand gleiten die Klinken beispielsweise an der Verzahnung ab und die beiden Ringe können relativ zueinander in eine Drehrichtung rotieren. Die Klinken können beispielsweise ein Verdrehen der beiden Ringe zueinander in eine Drehrichtung erlauben und in eine entgegengesetzte Drehrichtung ab einem Eingriff der Klinke mit der Verzahnung unterbinden. Die Klinken und die Verzahnung können an zueinander zugewandten Seiten der beiden Ringe angeordnet sein. Die beiden Ringe können koaxial zueinander angeordnet sein. Die beiden Ringe können in dem gleichen Axialbereich angeordnet sein. Die beiden Ringe können jeweils um eine Mittelachse drehbar gelagert sein. Beispielsweise ist einer der beiden Ringe mit einer Eingangswelle des Klinkenfreilaufs bzw. einer Welle der Antriebsanordnung permanent drehfest verbunden. Beispielsweise ist ein anderer der beiden Ringe mit einer Ausgangswelle des Klinkenfreilaufs bzw. einer Welle der Antriebsanordnung permanent drehfest verbunden.

Die Antriebsanordnung weist eine Sensorvorrichtung auf, welche dazu ausgebildet ist, eine Verformung des ersten Rings des Klinkenfreilaufs aufgrund einer anliegenden Antriebskraft zu erfassen. Die Antriebskraft kann beispielsweise an den zweiten Ring in dem Sperrzustand übertragen werden oder von dem zweiten Ring an den ersten Ring in dem Sperrzustand übertragen werden. Die Antriebskraft kann beispielsweise durch einen Fahrer des Fahrrads an jeweiligen Pedalen in die Antriebsanordnung eingeleitet werden. Die erfasste Verformung kann beispielsweise eine Aussage über ein übertragenes Drehmoment erlauben. Die anliegende Antriebskraft kann zu dem übertragenen Drehmoment korrespondieren. Durch die Erfassung kann beispielsweise eine Leistungsmessung, eine automatische Steuerung einer Gangschaltung des Fahrrads und alternativ oder zusätzlich eine Steuerung des Antriebsmotors möglich sein. Die Steuerung kann auch direkt in Abhängigkeit der erfassten Verformung erfolgen.

Die Sensorvorrichtung kann beispielsweise wenigstens einen Sensor aufweisen. Der Sensor kann an dem ersten Ring befestigt sein. Sofern mehrere Sensoren vorgesehen sind, können diese in Umfangsrichtung gleichmäßig beabstandet angeordnet sein. Sofern mehrere Sensoren vorgesehen sind, können diese in einem gleichen Umfang an dem ersten Ring bzw. mit einem gleichen radialen Abstand zu einer Drehachse angeordnet sein. Die Sensoren können beispielsweise axial auf Höhe des Klinkenfreilaufs angeordnet sein. Die Sensorvorrichtung kann beispielsweise dazu ausgebildet sein, die Verformung elektroresistiv, magnetisch, optisch oder auch akustisch zu bestimmen. Beispielsweise kann die Sensorvorrichtung einen oder mehrere an dem ersten Ring befestigte Dehnungsmessstreifen aufweisen. Alternativ können beispielsweise auch ein Hall-Sensoren genutzt werden. Die Sensorvorrichtung kann eine Auswertvorrichtung aufweisen, um jeweilige Sensorsignale auszuwerten. Sofern mehrere Sensoren vorgesehen sind, können deren Sensorsignale beispielsweise zu einem einzigen Messwert fusioniert werden.

Die Klinken sind ungleichmäßig in Umfangsrichtung beabstandet an dem ersten Ring angeordnet. Beispielsweise kann in eine linke Umfangsrichtung ein Abstand zwischen einer ersten Klinke und einer zweiten Klinke größer sein als in eine rechte Umfangsrichtung. Sofern beispielsweise drei Klinken vorgesehen sind, kann in eine Umfangsrichtung ein Abstand zwischen der ersten Klinke und der zweite Klinke größer sein als zwischen der zweiten Klinke und der dritten Klinke. Beispielsweise ist ein Abstand zwischen zwei benachbarten Klinken anders als ein Abstand zwischen zwei anderen benachbarten Klinken. Beispielsweise kann die erste Klinke an einer 11 Uhr Position angeordnet sein, die zweite Klinke an einer 1 Uhr Position und die dritte Klinke an einer 6 Uhr Position. Die Position anhand von Uhrzeiten dient hier zur Veranschaulichung des Abstands, welcher fest ist. Durch eine Rotation der zwei Ringe kann sich die tatsächliche Position der Klinken im Betrieb ändern, nicht jedoch deren relativer Abstand zueinander. Jeweilige folgende Ausführungen für zwei Klinken gelten gleichermaßen für drei oder mehr Klinken, sofern anwendbar. Die Beabstandung in Umfangsrichtung kann zu einem Winkelabstand korrespondieren. Zwischen zwei Klinken oder Gruppen von Klinken kann es einen klinkenfreien Umfangsbereich geben.

Ein Abstand in Umfangsrichtung zwischen zwei Klinken kann ein Winkel zwischen einer ersten und einer dazu in Umfangsrichtung benachbarten zweiten Klinke ausgehend von einem Mittelpunkt oder einer Drehachse des Klinkenfreilaufs sein. Gemessen werden kann beispielsweise an einem Lagerpunkt oder einem Eingriffspunkt der beiden Klinken. Beispielsweise kann für den Winkelabstand zwischen zwei Klinken von der gleichen Stelle bei jeder Klinke ausgegangen werden.

Durch die ungleichmäßige Beabstandung in Umfangsrichtung kann es einen besonders großen klinkenfreien Umfangsbereich an dem ersten Ring geben. In diesem klinkenfreien Umfangsbereich kann die Verformung durch die anliegende Antriebskraft besonders präzise erfasst werden. Störgrößen, beispielsweise durch radiale Reaktionskräfte an den Klinken, sind hier gering und können sich zudem homogenisiert haben. Dieser Effekt kann in der Mitte des klinkenfreien Umfangsbereich am größten sein. Beispielsweise kann ein Sensor mittig in Umfangsrichtung in einem klinkenfreien Umfangsbereich angeordnet werden. Der gewählte klinkenfreie Umfangsbereich kann dabei ein größter klinkenfreier Umfangsbereich sein. Zudem können so auch bei einer hohen Anzahl von Klinken die anliegende Antriebskraft präzise erfasst werden. Durch viele Klinken kann eine große Antriebskraft übertragbar sein. Beispielsweise können aber bei vielen Klinken aufgrund von Fertigungstoleranzen nicht alle Klinken gleichmäßig im Eingriff sein. Durch die ungleichmäßige Beabstandung der Klinken kann dies aber nur einen geringen Störeinfluss auf das Messsignal haben. Beispielsweise können die Klinken des Klinkenfreilaufs eng in zwei oder mehreren Gruppen angeordnet werden und zwischen diesen Gruppen ein großer Abstand vorgesehen werden. Durch die Gruppierung können eingeleitete Kräfte auch gebündelt werden, sodass in der Summe tangentiale Kräfte dominieren.

In einer Ausführungsform der Antriebsanordnung kann es vorgesehen sein, dass der erste Ring als Innenring ausgebildet ist und der zweite Ring als Außenring. Der zweite Ring kann radial außen zu dem ersten Ring angeordnet sein. Die Verzahnung kann dann radial innen an dem zweiten Ring angeordnet sein. Dadurch kann die Fertigung besonders kostengünstig und einfach sein. Zudem können jeweilige Sensoren so einfach an dem ersten Ring angebracht sein. Die jeweiligen Klinken können beispielsweise radial innen an dem ersten Ring gelagert sein.

In einer Ausführungsform der Antriebsanordnung kann es vorgesehen sein, dass der erste Ring als Außenring ausgebildet ist und der zweite Ring als Innenring. Der erste Ring kann radial außen zu dem zweiten Ring angeordnet sein. Die Verzahnung kann dann radial außen an dem zweiten Ring angeordnet sein. Die jeweiligen Klinken können beispielsweise radial innen an dem ersten Ring gelagert sein. Dadurch kann die Montage der Klinken vereinfacht sein.

Der Außenring kann beispielsweise als separates Bauteil ausgeformt sein oder alternativ als ein integriertes Bauteil ausgeformt sein, beispielsweise kann der Außenring als integriertes Bauteil in die Abtriebswelle integriert sein. In anderen Worten wird die Abtriebswelle mit einer Verzahnung versehen, welche den integrierten Außenring ausbildet. Der Innenring kann beispielsweise als separates Bauteil ausgeformt sein oder alternativ als ein integriertes Bauteil ausgeformt sein, beispielsweise kann der Innenring als integriertes Bauteil in die Tretlagerwelle integriert sein. In anderen Worten wird die Tretlagerwelle mit einer Verzahnung versehen, welche den integrierten Innenring ausbildet.

In einer Ausführungsform der Antriebsanordnung kann es vorgesehen sein, dass der zweite Ring eine in Umfangsrichtung durchgehende Verzahnung aufweist. Dadurch kann ein Eingriff besonders schnell und beispielsweise bereits bei einem geringem Drehwinkel in Sperrrichtung sichergestellt werden. Zudem kann der zweite Ring so einfach zu fertigen sein. Beispielsweise kann die Verzahnung durch eine Mantelfläche des zweiten Rings gebildet sein. Die Verzahnung kann beispielsweise radial innen oder radial außen angeordnet sein.

In einer Ausführungsform der Antriebsanordnung kann es vorgesehen sein, dass die Antriebsanordnung wenigstens einen ersten Klinkenbereich und einen zweiten Klinkenbereich aufweist. Ein Klinkenbereich kann durch Klinken gebildet werden, welche in Umfangsrichtung enger nebeneinander angeordnet sind als anderen Klinken des Klinkenfreilaufs, welche nicht zu dem Klinkenbereich gehören. Die Klinken eines Klinkenbereichs können eine Gruppe von Klinken bilden. Die Klinken eines Klinkenbereichs können gleichmäßig beabstandet sein. Der erste Klinkenbereich weist wenigstens zwei Klinken auf. Der zweite Klinkenbereich weist wenigstens eine Klinke auf. Der Klinkenfreilauf weist so beispielsweise wenigstens drei Klinken auf. Beispielsweise kann der Klinkenfreilauf vier Klinken aufweisen, wobei jedem Klinkenbereich zwei Klinken zugeordnet sind. Der Klinkenfreilauf kann auch drei Klinkenbereiche aufweisen, mit beispielsweise jeweils zwei, drei oder mehr Klinken pro Klinkenbereich. Es können auch vier oder mehr Klinkenbereiche vorgesehen sein. Durch eine hohe Anzahl Klinken kann der Klinkenfreilauf hohen Antriebskräften einfacher widerstehen.

Ein Abstand in Umfangsrichtung zwischen den Klinken des ersten Klinkenbereichs kann sich von einem Abstand in Umfangsrichtung zwischen den zwei Klinkenbereichen unterscheiden. Beispielsweise kann ein Abstand zwischen den Klinken eines Klinkenbereichs immer kleiner sein als ein Abstand zwischen unterschiedlichen Klinkenbereichen. Beispielsweise kann eine erste Klinke an der 11 Uhr Position angeordnet sein, eine zweite Klinke an der 1 Uhr Position, eine dritte Klinke an der 5 Uhr Position und eine vierte Klinke an der 7 Uhr Position. Die erste und die zweite Klinke sind dann dem ersten Klinkenbereich zugeordnet und die dritte und die vierte Klinke dem zweiten Klinkenbereich. Ein Abstand zwischen den Klinken in jedem Klinkenbereich ist entspricht dann 60° und ein Abstand zwischen den beiden Klinkenbereichen 120°. Der Abstand zwischen Klinken in einem Klinkenbereich kann beispielsweise ein kürzester Abstand zwischen jeweils benachbarten Klinken sein. Der Abstand zwischen den Klinkenbereichen kann ein Abstand zwischen den äußersten Klinken der Klinkenbereiche sein, welche in Umfangsrichtung benachbart sind. Der Abstand zwischen den Klinkenbereichen kann auch ein Abstand zwischen einer Mitte in Umfangsrichtung der jeweiligen Klinkenbereiche sein.

In einer Ausführungsform der Antriebsanordnung kann es vorgesehen sein, dass der zweite Klinkenbereich wenigstens zwei Klinken aufweist. Ein Abstand in Umfangsrichtung zwischen den Klinken des zweiten Klinkenbereichs kann sich von einem Abstand in Umfangsrichtung zwischen den zwei Klinkenbereichen unterscheiden. Durch die Gruppierung in Klinkenbereichen ist die Krafteinleitung sehr homogen und ein großer Abstand für jeweilige Sensoren möglich. Beispielsweise kann jeder Klinkenbereich eine identische Anzahl von Klinken aufweisen.

In einer Ausführungsform der Antriebsanordnung kann es vorgesehen sein, dass wobei die Klinken in den Klinkenbereichen gleichmäßig beabstandet in Umfangsrichtung an dem ersten Ring angeordnet sind. Beispielsweise kann ein Abstand zwischen unterschiedlichen benachbarten Klinken eines Klinkenbereichs immer identisch sein. Die Klinken eines jeden Klinkenbereichs können gleich in den Klinkenbereichen angeordnet sein. Beispielsweise können alle Klinkenbereiche drei Klinken aufweisen, wobei alle benachbarten Klinken in jedem Klinkenbereich einen identischen Abstand in Umfangsrichtung aufweisen.

In einer Ausführungsform der Antriebsanordnung kann es vorgesehen, dass die Klinkenbereiche gleichmäßig beabstandet in Umfangsrichtung an dem ersten Ring angeordnet sind. Der Abstand in Umfangsrichtung zwischen jedem benachbarten Klinkenbereich kann also ebenfalls identisch sein. Es kann sich eine gewisse Symmetrie ergeben. Alle Klinkenbereiche können identisch angeordnete Klinken aufweisen. Jeder Klinkenbereich kann beispielsweise wenigstens zwei Klinken aufweisen.

In einer Ausführungsform der Antriebsanordnung kann es vorgesehen sein, dass jeweilige Kraftübertragungsbereiche der Klinkenbereiche symmetrisch zu einem Erfassungsbereich der Sensorvorrichtung angeordnet sind. Ein Kraftübertragungsbereich kann ein Bereich sein, an welchem eine Klinke Kräfte in den ersten Ring einleitet. Der Kraftübertragungsbereich kann beispielsweise ein Bereich sein, an dem sich die Klinke im Sperrzustand abstützt. Beispielsweise kann der erste Ring für jede Klinke eine zugeordnete Tasche aufweisen, welche eine zu einem anliegenden Ende der Klinke korrespondierend geformte Rundung aufweist. Dort stützt sich die Klinke dann mit diesem Ende an dem ersten Ring ab, wenn sich die Klinke in dem Eingriff mit der Verzahnung bei dem zweiten Ring befindet. Ein Erfassungsbereich kann beispielsweise ein Bereich sein, an welchem die Sensorvorrichtung die Verformung des ersten Rings misst. Der Erfassungsbereich kann beispielsweise der Bereich sein, in welchem ein Dehnungsmessstreifen auf dem ersten Ring befestigt ist. Der Erfassungsbereich kann eine Messstelle sein. Beispielsweise kann ein Abstand in Umfangsrichtung von den beiden Klinkenbereich zu einem Erfassungsbereich der Sensorvorrichtung gleich sein. Die Sensorvorrichtung kann auch mehrere Erfassungsbereiche haben. Die Klinkenbereiche können symmetrisch zu einem, einigen oder allen der Erfassungsbereiche angeordnet sein. Durch die Symmetrie sind Störkräfte von den Klinken in Bezug auf die Erfassungsbereiche gleichmäßiger. Werden beispielsweise die Klinken selbst symmetrisch zu dem Erfassungsbereich angeordnet, können die Kräfte und damit auch Reaktionskräfte und Störkräfte unsymmetrisch in Bezug auf den Erfassungsbereich eingeleitet werden. Beispielsweise können die Kraftübertragungsbereiche achssymmetrisch zu einer sich senkrecht durch eine Drehachse des Klinkenfreilaufs erstreckende Symmetrieachse angeordnet sein. Beidseitig zu der Symmetrieachse kann beispielsweise jeweils ein Sensor der Sensorvorrichtung angeordnet sein. Jeder dieser Sensoren kann beispielsweise zu der Symmetrieachse in Umfangsrichtung maximal beabstandet angeordnet sein, also beispielsweise in Umfangsrichtung mittig zwischen zwei Schnittpunkten des Umfangs mit der Symmetrieachse. Die Sensoren können auf einer senkrecht zu der Symmetrieachse stehenden Achse an dem inneren Rad angeordnet sein. Jeweilige in die Verzahnung greifenden Enden der Klinken können unsymmetrisch zu dem Erfassungsbereich angeordnet sein.

In einer Ausführungsform der Antriebsanordnung kann es vorgesehen sein, dass die Sensorvorrichtung dazu ausgebildet ist, die Verformung des ersten Rings in wenigstens einem Bereich zu erfassen, welcher in Umfangsrichtung zwischen jeweiligen Klinken liegt, beispielsweise mittig. Beispielsweise kann der Erfassungsbereich in Umfangsrichtung in einem klinkenfreien Bereich angeordnet sein.

In einer Ausführungsform der Antriebsanordnung kann es vorgesehen sein, dass die Sensorvorrichtung dazu ausgebildet ist, die Verformung des ersten Rings in einem Bereich zu erfassen, in welchem ein von einem Fahrradfahrer an Pedalen des Fahrradantriebs eingebrachtes Drehmoment bereits summiert ist. Dadurch ist die erfasste Verformung besonders geeignet für Steuerungen des Antriebsstrangs und alternativ oder zusätzlich eine Leistungserfassung. Beispielsweise sind dafür jeweilige Sensoren an dem ersten Ring angeordnet, beispielsweise axial im Bereich des zweiten Rings. Beispielsweise können an dem ersten Ring bereits alle Drehmomente von beiden Pedalen des Fahrrads summiert sein. Sofern die Tretkurbelwelle den ersten Ring ausbildet, kann das eingebrachte Drehmoment beispielsweise axial im Bereich des zweiten Rings bzw. der Klinken summiert sein. Beispielsweise kann das Drehmoment von beiden Pedalen am Abgriff von der Tretkurbelwelle erstmalig summiert sein. Alternativ oder zusätzlich ist die Sensorvorrichtung dazu ausgebildet, die Verformung des ersten Rings in einem Bereich zu erfassen, in welchem ein von dem Fahrradfahrer an Pedalen des Fahrradantriebs eingebrachtes Drehmoment noch nicht mit einem Antriebsmoment des Antriebsmotors überlagert ist. So kann beispielsweise der Antriebsmotor einfach in Abhängigkeit von der Antriebskraft des Fahrradfahrers gesteuert werden.

In einer Ausführungsform der Antriebsanordnung kann es vorgesehen sein, dass die Antriebsanordnung eine Tretkurbelwelle und eine Abtriebswelle aufweist. Die Tretkurbelwelle kann beispielsweise permanent drehfest mit einem der beiden Ringe verbunden sein. Die Abtriebswelle kann beispielsweise permanent drehfest mit einem anderen der beiden Ringe verbunden sein. Die Tretkurbelwelle kann an einem Fahrradrahmen oder Antriebsgehäuse gelagert sein. An der Tretkurbelwelle können Kurbelarme beidseitig an einem axialen Endbereich drehfest befestigt sein. An den Kurbelarmen können Pedale drehbar gelagert sein. Die Abtriebswelle kann beispielsweise ein Ritzel aufweisen. Die Abtriebswelle kann mit einem Laufrad mechanisch wirkverbunden sein, beispielsweise über einen Riemen oder eine Kette. Der Klinkenfreilauf kann dazu ausgebildet sein, die Tretkurbelwelle mit der Abtriebswelle zu verbinden. In dem Sperrzustand des Klinkenfreilaufs kann durch die Tretkurbelwelle die Abtriebswelle antreibbar sein. In dem Freigabezustand kann dagegen die Tretkurbelwelle von der Abtriebswelle entkoppelt sein, beispielsweise damit die Tretkurbelwelle nicht von dem Laufrad angetrieben werden kann.

Ein zweiter Aspekt betrifft ein Fahrrad mit einer Antriebsanordnung gemäß dem ersten Aspekt und einem Abtriebselement. Das Abtriebselement kann beispielsweise ein hinteres Laufrad des Fahrrads sein. Das Abtriebselement kann durch die Antriebsanordnung antreibbar sein, beispielsweis wenn sich der Klinkenfreilauf in seinem Sperrzustand befindet. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

### Kurze Beschreibung der Figuren

Fig. 1 veranschaulicht einen Klinkenfreilauf für eine Antriebsanordnung eines Fahrrads gemäß dem Stand der Technik in einer schematischen Seitenansicht entlang einer Drehachse des Klinkenfreilaufs.
Fig. 2 veranschaulicht eine erste Ausführungsform eines Klinkenfreilaufs für eine Antriebsanordnung eines Fahrrads in einer schematischen Seitenansicht entlang einer Drehachse des Klinkenfreilaufs.
Fig. 3 veranschaulicht eine Einbausituation einer Antriebsanordnung in einem Fahrrad.
Fig. 4 veranschaulicht eine zweite Ausführungsform eines Klinkenfreilaufs für eine Antriebsanordnung eines Fahrrads in einer schematischen Seitenansicht entlang einer Drehachse des Klinkenfreilauf.

### Detaillierte Beschreibung von Ausführungsformen

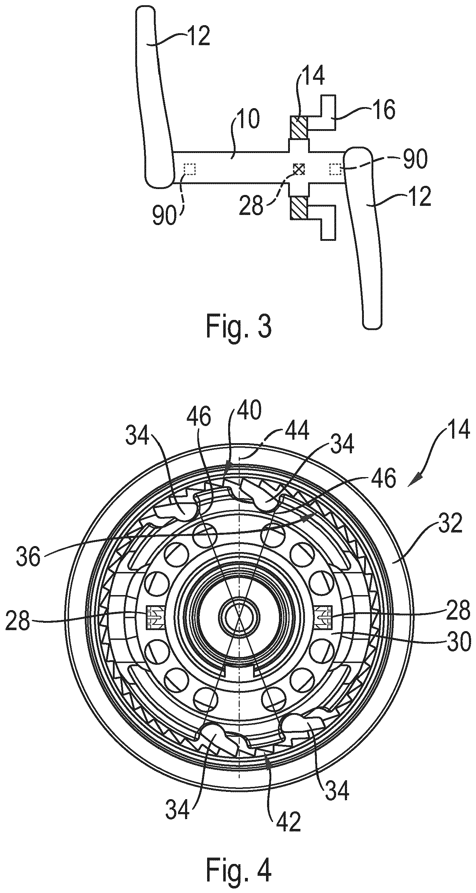

Fig. 3 veranschaulicht schematisch einen Einbau einer Antriebsanordnung in einem Fahrrad. Die Antriebsanordnung weist eine Tretkurbelwelle 10 mit beidseitig daran drehfest befestigten Tretkurbelarmen 12 auf. An den Tretkurbelarmen 12 ist jeweils ein nicht dargestelltes Pedal drehbar befestigt. Die Antriebanordnung weist zudem einen Klinkenfreilauf 14 und eine Abtriebswelle 16 mit Ritzel auf. Der Klinkenfreilauf 14 kann selbsttätig zwischen einem Sperrzustand, in welchem der Klinkenfreilauf 14 die Tretkurbelwelle 10 drehfest mit der Abtriebswelle 16 verbindet, und einem Freigabezustand, in welchem die Tretkurbelwelle 10 relativ zu der Abtriebswelle 16 rotieren kann, in Abhängigkeit von einer relativen Drehrichtung der Tretkurbelwelle 10 und der Abtriebswelle 16 zueinander wechseln. In dem Sperrzustand ist entsprechend durch den Klinkenfreilauf 14 ein Drehmoment übertragbar.

Die Antriebsanordnung weist eine Sensorvorrichtung auf, welche dazu ausgebildet ist, ein an der Tretkurbelwelle 10 durch den Fahrer eingebrachte Antriebskraft zu erfassen. In einer Ausführungsform erfolgt eine Steuerung eines elektrischen Antriebsmotors des Fahrrads in Abhängigkeit von dem erfassten Drehmoment. Herkömmlicherweise weist die Sensorvorrichtung dafür zwei Dehnungsmessstreifen 90 als Sensoren auf, welche axial benachbart zu jeweils einem der Tretkurbelarme 12 an der Tretkurbelwelle 10 angeordnet sind, um eine an dem Klinkenfreilauf 14 anliegende Antriebskraft zu erfassen. Dabei können jedoch erhebliche Störgrößen aufgrund einer wechselnden Gewichtsbelastung durch den Fahrer entstehen. Zudem werden dann die Messungen beider Seiten fusioniert, um eine insgesamt eingebrachte Antriebskraft zu erfassen.

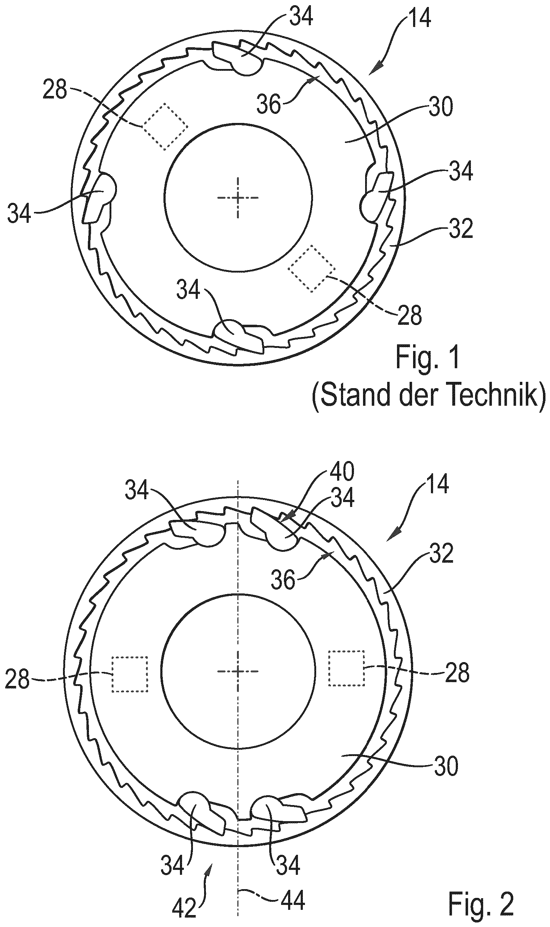

Alternativ kann die an dem Klinkenfreilauf 14 anliegende Antriebskraft deshalb auch durch eine Verformungsmessung axial auf der Höhe des Klinkenfreilaufs 14 erfasst werden. Fig. 1 veranschaulicht dazu einen herkömmlichen Klinkenfreilauf 14 gemäß dem Stand der Technik. Dieser Klinkenfreilauf 14 weist einen ersten Ring 30 auf, welcher als Innenring ausgebildet ist und in dem gezeigten Beispiel permanent drehfest mit der Tretkurbelwelle 10 verbunden ist. An dem ersten Ring 30 sind vier Klinken 34 an einem Außenumfang mit einem Endbereich beweglich, hier verschwenkbar, gelagert. Die vier Klinken 34 sind dabei gleichmäßig in Umfangsrichtung beabstandet an dem ersten Ring 30 angeordnet. Zwischen allen in Umfangsrichtung benachbarten Klinken 34 ist ein Winkelabstand von 90° vorgesehen. Weiterhin weist der Klinkenfreilauf 14 einen zweiten Ring 32 auf. Der zweite Ring 32 ist als Außenring ausgebildet und in dem in Fig. 1 gezeigten Beispiel permanent drehfest mit der Abtriebswelle 16 verbunden. Der zweite Ring 32 weist eine Verzahnung 36 auf, welche in dem gezeigten Beispiel radial nach innen weist und an einer inneren Mantelfläche des zweiten Rings 32 ausgebildet ist. Die Verzahnung 36 ist für einen Eingriff mit jeweiligen dem ersten Ring 30 abgewandten Enden der Klinken 34 ausgebildet. In dem Sperrzustand des Klinkenfreilaufs 14 sind die Klinken 34 im Eingriff mit der Verzahnung 36, sodass die beiden Ringe 30, 32 drehfest miteinander gekoppelt werden. In einem Freigabezustand gleiten die Klinken 34 an der Verzahnung ab und erlauben so ein relatives Verdrehen der beiden Ringe 30, 32 zueinander.

In einem Umfangsbereich zwischen zwei benachbarten Klinken 34 ist an zwei gegenüberliegenden Seiten in einem gleichen radialen Abstand zu einer Drehachse des Klinkenfreilaufs 14 jeweils ein Sensor 28 an dem ersten Ring 30 angeordnet. Diese zwei Sensoren 28 ersetzen bei der Sensorvorrichtung die Dehnungsmessstreifen 90. Die Sensoren 28 sind als Dehnungsmessstreifen ausgebildet und erfassen eine Verformung des ersten Rings 30 aufgrund der anliegenden Antriebskraft. Die Sensorvorrichtung ist entsprechend ebenfalls dazu ausgebildet, eine Verformung des ersten Rings 30 des Klinkenfreilaufs 14 aufgrund der anliegenden Antriebskraft zu erfassen. Bei dem Klinkenfreilauf 14 sind jeweilige seitlich eingebrachte Antriebskräfte bereits zu einer insgesamt eingebrachten Antriebskraft summiert.

Bei dem in Fig. 1 gezeigten herkömmlichen Klinkenfreilauf 14 können jedoch erhebliche Störgrößen im Messbereich der zwei Sensoren 28 wirken. Bei den Klinken 34 gibt es radiale Reaktionskräfte. Zudem können die Klinken 34 aufgrund von Fertigungstoleranzen ungleichmäßig eingreifen, wodurch unterschiedlich große Antriebskraftanteile bei unterschiedlichen Klinken 34 übertragen werden. Entsprechend ist eine Erfassung der anliegenden Antriebskraft durch die Sensoren 28 ungenau.

Eine erste Ausführungsform des Klinkenfreilaufs 14, gezeigt in Fig. 2, reduziert diese Störeffekte. Es werden im Folgenden die Unterschiede zu dem herkömmlichen Klinkenfreilauf 14 gemäß Fig. 1 erläutert. Bei dieser ersten Ausführungsform sind die Klinken 34 ungleichmäßig in Umfangsrichtung beabstandet an dem ersten Ring 30 angeordnet. In dem gezeigten Beispiel weist der erste Ring 30 einen ersten Klinkenbereich 40 und einen zweiten Klinkenbereich 42. Jeder Klinkenbereich 40, 42 weist zwei Klinken 34 auf, welche nahe in Umfangsrichtung beieinander angeordnet sind. In dem gezeigten Beispiel beträgt ein Winkelabstand zwischen den zwei Klinken 34 eines Klinkenbereichs 30°. Entsprechend sind die einander zugewandten Klinken 34 unterschiedlicher Bereich weiter beabstandet, hier mit einem Winkelabstand von 150°. Ein Abstand in Umfangsrichtung zwischen den Klinken 34 der beiden Klinkenbereiche 40, 42 unterscheidet sich somit von einem Abstand in Umfangsrichtung zwischen den zwei Klinkenbereichen 40, 42. Korrespondierend ist zwischen den Klinkenbereichen 40, 42 ein großer klinkenfreier Umfangsbereich mit 150° Winkelerstreckung vorgesehen, obwohl eine Anzahl Klinken 34 gegenüber dem herkömmlichen Klinkenfreilauf 14 gleich ist. Die Anordnung der Klinken 34 in jedem der Klinkenbereiche 40, 42 ist identisch.

In jedem klinkenfreien Umfangsbereich ist bei der ersten Ausführungsform jeweils einer der zwei Sensoren 28 angeordnet, also zwischen den Klinken 34 der beiden Klinkenbereiche 40, 42. Es ergibt sich eine stärkere Homogenisierung der eingetragenen Kräfte und auch ein geringerer Einfluss der Störgrößen von den Klinken 34 im Messbereich der Sensoren 28. Die anliegende Antriebskraft kann so besonders präzise erfasst werden.

Bei der ersten Ausführungsform des Klinkenfreilaufs 14 sind die Klinken 34 in Taschen an einem Außenumfang des ersten Rings 30 angeordnet. Ein gerundetes Ende der Klinken 34, welches dem ersten Ring 30 im Sperrzustand zugewandt ist, stützt sich dabei an einem Boden der Taschen im Sperrzustand ab. Dies entspricht dem jeweiligen Kraftübertragungsbereich der Klinken 34. Bei der ersten Ausführungsform sind jeweils die Taschen und damit auch die Klinken 34 symmetrisch in Bezug auf eine Anordnung der beiden Sensoren 28 an dem ersten Ring 30 und damit auch auf einen Erfassungsbereich der Sensoren 28 angeordnet. Die entsprechende Symmetrieachse 44 ist in Fig. 2 veranschaulicht. Die Sensoren 28 sind achssymmetrisch zu der Symmetrieachse 44 angeordnet, welche sich radial durch die Drehachse des Klinkenfreilaufs 14 erstreckt. Entsprechend ergibt sich aber eine asymmetrische Anordnung der Kraftübertragungsbereiche zu den Erfassungsbereichen der Sensorvorrichtung.

In Fig. 4 ist eine zweite Ausführungsform des Klinkenfreilaufs 14 gezeigt. Es werden im Folgenden die Unterschiede zu der ersten Ausführungsform des Klinkenfreilaufs 14 gemäß Fig. 2 erläutert. Bei der zweiten Ausführungsform sind die Taschen und damit auch die Klinken 34 unsymmetrisch in Bezug auf eine Anordnung der beiden Sensoren 28 an dem ersten Ring 30 und damit auch nicht achssymmetrisch zu den Erfassungsbereichen der Sensoren 28 angeordnet. Stattdessen sind die Kraftübertragungsbereiche symmetrisch zu den Erfassungsbereichen der Sensorvorrichtung und den Sensoren 28 angeordnet. Dies kann anhand der Symmetrieachse 44 in Fig. 4 erkannt werden. Weiterhin sind in Fig. 4 zwei Linien 46 eingezeichnet, welche jeweils eine Gerade, getragen von dem Kraftübertragungsbereich der Klinken 34 und dem Mittelpunkt des ersten Rings 30, bilden. Erkennbar sind die Kraftübertragungsbereiche symmetrisch zu der Symmetrieachse und damit zu den Erfassungsbereichen der Sensorvorrichtung angeordnet. Es ergibt sich in Bezug auf die Sensoren 28 eine gleichmäßigere Krafteinleitung, wodurch die Erfassung der anliegenden Antriebskraft besonders präzise ist.

### Bezugszeichen

- 10: Tretkurbelwelle
- 12: Tretkurbelarme
- 14: Klinkenfreilauf
- 16: Abtriebswelle
- 28: Sensoren
- 30: erster Ring
- 32: zweiter Ring
- 34: Klinken
- 36: Verzahnung
- 40: erster Klinkenbereich
- 42: zweiter Klinkenbereich
- 44: Symmetrieachse
- 46: Linie
- 90: Dehnungsmessstreifen

## Patentansprüche

1. Antriebsanordnung für ein Fahrrad, wobei die Antriebsanordnung einen Klinkenfreilauf (14) aufweist, wobei der Klinkenfreilauf (14) einen ersten Ring (30) mit wenigstens zwei beweglich daran gelagerten Klinken (34) und einen zweiten Ring (32) mit einer Verzahnung (36) aufweist, wobei Antriebsanordnung wenigstens einen Sensorvorrichtung (28) aufweist, welche dazu ausgebildet ist, eine Verformung des ersten Rings (30) des Klinkenfreilaufs (14) aufgrund einer anliegenden Antriebskraft zu erfassen, wobei die Klinken (34) ungleichmäßig in Umfangsrichtung beabstandet an dem ersten Ring (30) angeordnet sind.

2. Antriebsanordnung nach einem der vorhergehenden Ansprüche, **dadurch gekennzeichnet, dass** der erste Ring (30) als Innenring ausgebildet ist und der zweite Ring (32) als Außenring.

3. Antriebsanordnung nach Anspruch 1, **dadurch gekennzeichnet, dass** der erste Ring (30) als Außenring ausgebildet ist und der zweite Ring (32) als Innenring.

4. Antriebsanordnung nach einem der vorhergehenden Ansprüche, **dadurch gekennzeichnet, dass** der zweite Ring (32) eine in Umfangsrichtung durchgehende Verzahnung (36) aufweist.

5. Antriebsanordnung nach einem der vorhergehenden Ansprüche, **dadurch gekennzeichnet, dass** die Antriebsanordnung wenigstens einen ersten Klinkenbereich (40) und einen zweiten Klinkenbereich (42) aufweist, wobei der erste Klinkenbereich (40) wenigstens zwei Klinken (34) aufweist, wobei der zweite Klinkenbereich (42) wenigstens eine Klinke (34) aufweist, wobei ein Abstand in Umfangsrichtung zwischen den Klinken (34) des ersten Klinkenbereichs (40) sich von einem Abstand in Umfangsrichtung zwischen den zwei Klinkenbereichen (40, 42) unterscheidet.

6. Antriebsanordnung nach Anspruch 5, **dadurch gekennzeichnet, dass** der zweite Klinkenbereich (42) wenigstens zwei Klinken (34) aufweist, wobei ein Abstand in Umfangsrichtung zwischen den Klinken (34) des zweiten Klinkenbereichs (42) sich von einem Abstand in Umfangsrichtung zwischen den zwei Klinkenbereichen (40, 42) unterscheidet.

7. Antriebsanordnung nach Anspruch 5 oder 6, **dadurch gekennzeichnet, dass** die Klinken (34) in den Klinkenbereichen (40, 42) gleichmäßig beabstandet in Umfangsrichtung an dem ersten Ring (30) angeordnet sind.

8. Antriebsanordnung nach einem der Ansprüche 5 bis 7, **dadurch gekennzeichnet, dass** die Klinkenbereiche (40, 42) gleichmäßig beabstandet in Umfangsrichtung an dem ersten Ring (30) angeordnet sind.

9. Antriebsanordnung nach einem der vorhergehenden Ansprüche 5 bis 8, **dadurch gekennzeichnet, dass** jeweilige Kraftübertragungsbereiche der Klinkenbereiche (40, 42) symmetrisch zu einem Erfassungsbereich der Sensorvorrichtung angeordnet sind.

10. Antriebsanordnung nach einem der vorhergehenden Ansprüche, **dadurch gekennzeichnet, dass** die Sensorvorrichtung dazu ausgebildet ist, die Verformung des ersten Rings (30) in wenigstens einem Bereich zu erfassen, welcher in Umfangsrichtung zwischen jeweiligen Klinken (34) liegt.

11. Antriebsanordnung nach einem der vorhergehenden Ansprüche, **dadurch gekennzeichnet, dass** die Antriebsanordnung eine Tretkurbelwelle (10) und eine Abtriebswelle (16) aufweist, wobei der Klinkenfreilauf (14) dazu ausgebildet ist, die Tretkurbelwelle (10) mit der Abtriebswelle (16) zu verbinden.

12. Fahrrad mit einer Antriebsanordnung nach einem der vorhergehenden Ansprüche und einem Abtriebselement, welches durch die Antriebsanordnung antreibbar ist.
